# EUROPÄISCHE PATENTANMELDUNG

(11) **EP 0 800 908 A1**
(43) Veröffentlichungstag der Anmeldung: **15.10.1997**
(21) Anmeldenummer: 97105851.6
(22) Anmeldetag: 09.04.1997
(51) Int. Cl.: B29C 45/57

(54) **Verfahren und Vorrichtung zum Spritzgiessen von Kunststoffteilen**

(30) Priorität: 12.04.1996 DE 19614532; 03.05.1996 DE 19617769; 02.08.1996 DE 19631209
(71) Anmelder: HERBST, Richard, D-85386 Eching (DE)
(72) Erfinder: HERBST, Richard, D-85386 Eching (DE)
(74) Vertreter: Witte, Alexander, Dr.-Ing.

(57) **Zusammenfassung**

Ein Verfahren und eine Vorrichtung dienen zum Spritzgießen von Kunststoffteilen, insbesondere sogenannten Smart-Cards. Eine vorbestimmte Menge einer Kunststoffschmelze wird über einen Angußkanal (19) in mindestens einen Formhohlraum (15, 16) eines Werkzeugs (10) eingebracht. An das Werkzeug (10) ist ein Spritzgießaggregat (30) zum Einbringen der Kunststoffschmelze angeschlossen. Mindestens ein Kanal (17, 18, 19) verbindet den mindestens einen Formhohlraum (15, 16) mit dem Spritzgießaggregat (30). Mindestens ein Teil der Menge wird zunächst in einen im Werkzeug (10) angeordneten Reserve-Hohlraum (45) eingebracht und dann in den mindestens einen Formhohlraum (15, 16) überführt.

## Beschreibung

Die Erfindung betrifft ein Verfahren zum Spritzgießen von Kunststoffteilen, bei dem eine vorbestimmte Menge einer Kunststoffschmelze über einen Angußkanal in mindestens einen Formhohlraum eines Werkzeugs eingebracht wird, wobei mindestens ein Teil der Menge zunächst in einen Reserve-Hohlraum eingebracht und dann in den mindestens einen Formhohlraum überführt wird.

Die Erfindung betrifft ferner eine Vorrichtung zum Spritzgießen von Kunststoffteilen, mit einem Werkzeug, mit mindestens einem Formhohlraum im Werkzeug, mit einem an das Werkzeug anschließbaren Spritzgießaggregat zum Einbringen von Kunststoffschmelze, und mit mindestens einem Kanal, der den mindestens einen Formhohlraum mit dem Spritzgießaggregat verbindet, wobei das Spritzgießaggregat mit einem Reserve-Hohlraum in Verbindung steht, und Mittel zum Überführen von Kunststoffschmelze aus dem Reserve-Hohlraum in den Formhohlraum vorgesehen sind.

Ein Verfahren und eine Vorrichtung der vorstehend genannten Art sind aus der DE-C2-42 24 196 bekannt.

Obwohl die Erfindung nicht darauf beschränkt ist, wird sie bevorzugt zum Spritzgießen von sehr flachen Gegenständen, insbesondere von sogenannten Smart-Cards oder Compact-Discs eingesetzt. Unter einer Smart-Card versteht man eine ein- oder doppelseitig kaschierte Kunststoffkarte, die üblicherweise mit Hinweis- und/oder Werbeaufdrucken und/oder mit Sicherheitsmerkmalen, z.B. einem Hologramm, einem Magnetstreifen, einem Foto des Karteninhabers oder dergleichen, versehen ist. In die Smart-Card ist ein sogenanntes Modul eingebettet. Das Modul besteht aus einem elektronischen Schaltkreis (Chip) sowie üblicherweise einem Trägerplättchen, auf dem der Chip sitzt. Das Plättchen bildet bei bestimmten Karten mit mehreren Oberflächensegmenten elektrische Kontakte, die von außen zugänglich sind. Derartige Smart-Cards werden als Telefonkarten, Berechtigungskarten für mobile Nachrichtengeräte, als Scheckkarten im Geldverkehr, als Berechtigungsnachweis für Krankenkassen oder dergleichen, als Berechtigungsnachweis für den Zugang in bestimmte Gebäude oder Gebäudeteile und für andere Zwecke, z.B. zur Warensicherung, eingesetzt.

Zum Herstellen der Smart-Cards wird ein Kunststoff-Spritzgießverfahren eingesetzt. Hierzu dient ein Werkzeug, das üblicherweise aus zwei oder mehreren Teilen, sogenannten Werkzeughälften, besteht. Ein im Werkzeug vorgesehener Hohlraum hat die flache, quaderförmige Gestalt der Smart-Card. Herkömmlicherweise wird das Kunststoffmaterial in einem üblichen Spritzgießaggregat verflüssigt, und die Kunststoffschmelze wird dann über eine Öffnung in den Hohlraum eingebracht. Das Spritzgießaggregat umfaßt üblicherweise eine Schnecke zum Verflüssigen und Fördern des Kunststoffs. Die Kunststoffschmelze wird mittels der Schnecke in das Werkzeug und damit in den Formhohlraum eingebracht. Dies kann entweder nur durch Drehung der Schnecke geschehen oder auch durch ein schnelles axiales Verfahren der Schnecke. Im letztgenannten Fall spricht man von "Einspritzen".

In diesem Zusammenhang befaßt sich die vorliegende Erfindung mit den folgenden beiden Problemen:

Ein erstes Problem besteht generell beim Spritzgießen von Kunststoffteilen darin, daß die in den Formhohlraum eingebrachte Kunststoffschmelze beim Erstarren schrumpft, also eine Volumenverminderung zeigt. Bei bekannten Verfahren und Vorrichtungen wird dieser Effekt dadurch kompensiert, daß man die Kunststoffschmelze "nachdrückt". In der Praxis geht man so vor, daß die beim Einbringvorgang vorfahrende Schnecke des Spritzgießaggregates kurz vor Erreichen des Endanschlages angehalten wird, so daß noch eine gewisse Menge an flüssiger Kunststoffschmelze in Reserve gehalten wird. Diese Menge wird dann nach einem vorbestimmten Zeitprogramm nachgeschoben, also zusätzlich in den Formhohlraum hineingedrückt, um die durch den Schrumpfungsvorgang verursachte Volumenverminderung der erstarrenden Kunststoffschmelze zu kompensieren.

Bei herkömmlichen Verfahren und Vorrichtungen läßt sich dieser Nachdrückvorgang nicht oder nur in grober Näherung reproduzierbar einstellen bzw. regeln. Dies liegt daran, daß die während des Nachdrückvorganges zurückgelegte Wegstrecke der Schnecke sehr gering ist, weil sich bei einem typischen Durchmesser der Schnecke von 32 mm nur ein Hubweg von z.B. 0,2 mm ergibt, der in Verbindung mit dem Schneckendurchmesser dem benötigten Volumen der Menge von Kunststoffschmelze entspricht, die zum Nachdrücken benötigt wird. Hinzu kommt, daß beim Spritzgießen stets sehr kurze Zykluszeiten angestrebt werden, was wiederum zu hohen Verfahrgeschwindigkeiten der Schnecke im Spritzgießaggregat führt. Berücksichtigt man ferner, daß beim Einbringvorgang auch relativ große Massen bewegt werden, so ist leicht einzusehen, daß diese großen Massen in Verbindung mit den hohen Geschwindigkeiten es nicht gestatten, innerhalb eines Nachdrückhubes von beispielsweise nur 0,2 mm eine auch nur einigermaßen genaue Regelung von Lage und/oder Zeitablauf zu ermöglichen.

Das zweite Problem besteht darin, daß es bei herkömmlichen Verfahren und Vorrichtungen oftmals schwierig ist, Kunststoffteile mit sehr geringem Volumen zu Spritzen. Dies liegt daran, daß die Schnecken von üblichen Spritzgießaggregaten nicht mit beliebig kleinem Durchmesser gebaut werden können, weil das üblicherweise eingesetzte Granulat eine bestimmte Körnung aufweist, die dem Durchmesser der Schnecke bzw. dem axialen Abstand der Gänge der Schnecke nach unten hin gewisse Grenzen setzt.

Wenn daher bei herkömmlichen Verfahren und Vorrichtungen mit derartigen Schnecken nur sehr geringe Mengen an Kunststoffschmelze eingebracht werden sollen, ergeben sich wiederum sehr kleine Hübe, und zwar sowohl für den Einbringvorgang selbst wie auch insbesondere für das erforderliche Nachdrücken.

Aus der eingangs erwähnten DE-C2-42 24 196 sind ein Verfahren und eine Vorrichtung zum Nachdrücken von Spritzgießmassen bekannt. Danach wird ein sogenannter Nachdruckbaustein verwendet, der zwischen der Schneckendüse eines Spritzgießaggregats und der Spritzgießform, d.h. dem Werkzeug, eingebaut ist. Durch den Nachdruckbaustein führt somit ein Teil des Zufuhrkanals, der das Spritzgießaggregat mit dem Formhohlraum verbindet. In diesem Abschnitt des Zufuhrkanals, der sich durch den Nachdruckbaustein hindurch erstreckt, laufen koaxial ein Hohlzylinder sowie darin ein Kolben. Während des Einspritzvorganges sind der Hohlzylinder und der Kolben zurückgezogen, so daß die Kunststoffschmelze ungehindert vom Spritzgießaggregat durch den gesamten Zufuhrkanal, also auch durch den Nachdruckbaustein, zum Formhohlraum strömen kann. Am Ende des Einspritzvorganges fährt zunächst der Hohlzylinder vor und versperrt den Anschluß vom Spritzgießaggregat zum Nachdruckbaustein. Danach fährt der Kolben im Hohlzylinder vor und drückt ein bestimmtes Volumen der im Nachdruckbaustein befindlichen Kunststoffschmelze vor. Durch dieses Nachdrücken wird eine Kompensation des Schrumpfens bewirkt, dem die Kunststoffmasse beim Erstarren unterliegt.

Diese bekannte Anordnung ist jedoch mit mehreren Nachteilen behaftet.

Zunächst ist nachteilig, daß sich der Nachdruckbaustein zwischen dem Schneckenausgang und dem Werkzeug befindet. An dieser Stelle einer Spritzgießmaschine ist üblicherweise kein oder nur sehr wenig Einbauraum vorhanden, so daß das Vorsehen eines separaten Nachdruckbausteins zu konstruktiven Problemen führt.

An dieser Stelle der Spritzgießmaschine herrscht auch eine besonders hohe Temperatur, weil sich das Spritzgießaggregat auf einer sehr hohen Temperatur befindet und sich diese durch den engen Kontakt zum Werkzeug auf dieses überträgt. Die Elemente, insbesondere die bewegten Elemente des Nachdruckbausteins müssen daher diesen sehr hohen Temperaturen standhalten. Dies gilt auch für die Verfahreinrichtung für den Kolben und den Hohlzylinder.

Dadurch, daß der Nachdruckbaustein sich außerhalb des Werkzeugs befindet, ergibt sich auch eine schwierigere Montage, weil entweder der Nachdruckbaustein bei jedem Werkzeugwechsel vom Werkzeug gelöst oder zusammen mit diesem gehandhabt werden muß.

Ein weiterer Nachteil der bekannten Anordnung besteht darin, daß das mittels des Kolbens im Nachdruckbaustein verdrängbare Volumen der Kunststoffmasse begrenzt ist, und zwar sowohl nach oben als auch nach unten. Weiterhin ergibt sich ein Nachteil dadurch, daß der Anschluß der Kunststoffmasse zwischen dem Spritzgießaggregat und dem Zufuhrkanal zwischen zwei Einspritzvorgängen nicht garantiert werden kann, weil durch das Vorfahren des Hohlzylinders jeweils eine Unterbrechung des Kunststoffstranges eintritt.

Weiterhin muß bei der bekannten Vorrichtung das Kanalstück im Nachdruckbaustein speziell dimensioniert und angeordnet werden, damit darin ein Kolben und ein Hohlzylinder über eine bestimmte Strecke laufen können.

Schließlich ist bei der bekannten Vorrichtung von Nachteil, daß nach Beendigung des Einspritz- und des Nachdrückvorganges noch ein gewisser Kunststoffrest als "alter Strang" im Zufuhrkanal verbleibt.

Aus der JP-A-0 706 860 ist ein angußfreies Spritzgießwerkzeug bekannt. Bei diesem Werkzeug führt ein Zufuhrkanal zu einem Formhohlraum. An diesen Zufuhrkanal ist seitlich eine Nadeldüse angeschlossen, über die eine verflüssigte Kunststoffmasse in radialer Richtung einströmen und dann in den Formhohlraum gelangen kann. Hinter der Einmündung des Nadelventils (vom Formhohlraum aus gesehen) läuft in dem Zufuhrkanal ein verfahrbarer Kolben. Wenn bei der bekannten Vorrichtung eine vorbestimmte Menge an Kunststoffmasse über das Nadelventil und den Zufuhrkanal in den Formhohlraum eingespritzt wurde, fährt der Kolben im Zufuhrkanal vor. Er versperrt auf diese Weise die seitlich angeordnete Öffnung zum Nadelventil und fährt mit seiner ebenen Stirnseite bis zum Übergang zum Formhohlraum vor, so daß die gesamte im Zufuhrkanal befindliche Masse noch in den Formhohlraum befördert wird.

Auch bei dieser bekannten Anordnung stellen sich damit im wesentlichen dieselben Nachteile ein wie bei der Anordnung gemäß DE-C2-42 24 196, weil sich der Reservehohlraum wiederum im Bereich des Zufuhrkanals zwischen Spritzgießaggregat und Formhohlraum befindet und eine Kolbenanordnung in axialer Richtung durch den Zufuhrkanal verschoben werden kann.

Schließlich sind in der DE-A1-41 13 148 noch ein Verfahren und eine Vorrichtung zum Herstellen laminierter Formteile aus thermoplastischem Kunststoff-Material bekannt.

Bei der bekannten Anordnung wird in eine Werkzeughälfte zunächst eine vorgefertigte Deckschicht aus einem flexiblen Material eingelegt. In der anderen, komplementären Werkzeughälfte befinden sich eine oder mehrere Mulden, die zunächst mit einem flüssigen Kunststoff befüllt werden. Die Werkzeughälften werden dann zusammengefügt und das Werkzeug geschlossen, so daß die vorgefertigte Deckschicht zwischen den komplementär ausgeformten Werkzeughälften in ihre Endform gebracht wird. Ein in der Mulde laufender Kolben wird nun vorgefahren, so daß das in der Mulde befindliche Kunststoffmaterial gegen die vorgefertigte Deckschicht gepreßt wird.

Dieses bekannte Verfahren ist somit kein Hochdruck-Spritzgießverfahren sondern vielmehr ein Niederdruck-Formverfahren, bei dem die in der Mulde befindliche Kunststoffmasse lediglich gegen die vorgefertigte und vorgeformte Deckschicht gedrückt wird.

Der Erfindung liegt demgegenüber die Aufgabe zugrunde, ein Verfahren und eine Vorrichtung der eingangs genannten Art dahingehend weiterzubilden, daß die vorstehend genannten Problem gelöst werden.

Insbesondere soll es möglich sein, den Reserve-Hohlraum und die Mittel zum Überführen der Kunststoffschmelze aus diesem in den Formhohlraum möglichst einfach, gleichzeitig aber variabel auszubilden. Auf diese Weise soll es möglich werden, verschiedene Techniken nach dem erfindungsgemäßen Verfahren auszuführen, insbesondere das bereits erwähnte Nachdrücken wie aber auch das eigentliche Befüllen von Formhohlräumen kleinen Volumens. Die hierzu erforderlichen Elemente sollen an beliebiger Stelle und mit nahezu beliebiger Konstruktion angebracht werden können, vorzugsweise auf der "kalten" Seite des Werkzeugs und in dieses integriert.

Schließlich soll erreicht werden, daß sich hinsichtlich des Angußstranges zwischen zwei Einspritzvorgängen keine Probleme ergeben, wobei besonders bevorzugt ist, den Kunststoffstrang mittels der bereits erwähnten Elemente am Ende des Einspritz- und Nachdrückvorganges in der Ebene des Überganges zum Formhohlraum abzuscheren.

Bei einem Verfahren der eingangs genannten Art wird diese Aufgabe erfindungsgemäß dadurch gelöst, daß die Kunststoffschmelze am Ende des Angußkanals verzweigt wird, wobei ein erster Teil der Menge in den Reserve-Hohlraum und gleichzeitig ein zweiter Teil in den Formhohlraum eingebracht wird.

Bei einer Vorrichtung der eingangs genannten Art wird die der Erfindung zugrundeliegende Aufgabe dadurch gelöst, daß der Reserve-Hohlraum im Werkzeug angeordnet ist, und daß der Kanal ausgangsseitig in den Formhohlraum einerseits und in den Reserve-Hohlraum andererseits verzweigt ist.

Die Erfindung löst damit die zugrundeliegende Aufgabe vollkommen.

Im Gegensatz zu der Vorrichtung gemäß DE-C2-42 24 196 findet nämlich das erfindungsgemäße Verfahren im Werkzeug selbst statt bzw. ist die erfindungsgemäße Vorrichtung in das Werkzeug selbst integriert, und zwar vorzugsweise auf dessen "kalter" Seite, so daß keine so hohen Anforderungen an die vorgesehenen Elemente zu stellen sind. Darüber hinaus können die Elemente, insbesondere die Form und Größe des Reserve-Hohlraumes in weiten Grenzen frei dimensioniert werden, weil man von den Beschränkungen im Übergangsbereich zwischen Spritzgießaggregat und Werkzeug frei ist.

Bei einer bevorzugten Ausgestaltung des erfindungsgemäßen Verfahrens ist der erste Teil der Menge wesentlich größer als der zweite Teil.

Diese Maßnahme hat den Vorteil, daß der Reserve-Hohlraum insgesamt zum Einspritzen der benötigten Menge an Kunststoffschmelze in den Formhohlraum oder die Formhohlräume genutzt werden kann. Man kann dann beispielsweise auch sehr kleine Formhohlräume ausspritzen, weil der Vorgang der Überführung von der Funktion des Spritzgießaggregates unabhängig ist.

Entsprechendes gilt auch für eine alternative Ausführungsform des erfindungsgemäßen Verfahrens, bei der der erste Teil der Menge wesentlich kleiner als der zweite Teil ist und der erste Teil der Menge zum Nachdrücken von Kunststoffschmelze in den mindestens einen Formhohlraum eingesetzt wird.

In beiden Fällen ergeben sich die bereits geschilderten Vorteile hinsichtlich größerer Flexibilität und vor allem auch hinsichtlich einer Verkürzung der Zykluszeit.

Bei einer bevorzugten Ausgestaltung der erfindungsgemäßen Vorrichtung ist der Reserve-Hohlraum als Zylinderbohrung einer ersten Kolben-Zylinder-Einheit ausgebildet, dessen Kolben Teil der Überführungsmittel ist.

Diese Maßnahme hat den Vorteil, daß Elemente eingesetzt werden, wie sie in Spritzgießwerkzeugen bekannt und bewährt sind.

Eine besonders gute Wirkung wird erzielt, wenn der Kolben an einer den Formhohlraum mit dem Kanal verbindenden Öffnung angeordnet und so verschiebbar ist, daß eine Steuerkante des Kolbens über die Öffnung führbar ist.

Diese Maßnahme hat den zusätzlichen Vorteil, daß ein Kunststoffteil mit praktisch unsichtbarem Anguß entsteht. Die über die Öffnung führbare Steuerkante des Kolbens bewirkt nämlich, daß der durch die Öffnung reichende Kunststoffstrang sauber abgeschert wird, so daß die Kunststoffschmelze im Formhohlraum unter Anlage am Kolben erstarren kann. Der Anguß ist dann praktisch nicht mehr sichtbar.

Bei diesem Ausführungsbeispiel ist besonders bevorzugt, wenn der Kolben als Hohlzylinder ausgebildet ist, der auf einem Innenkolben läuft.

Diese Maßnahme hat den Vorteil, daß auch sehr flache Werkstücke mit einer Durchgangsbohrung relativ großen Durchmessers hergestellt werden können, beispielsweise Compact-Discs. In diesem Falle kann der Nachdrückvorgang im wesentlichen durch den Innenkolben bewirkt werden, während der Hohlzylinder zum angußfreien Abscheren der Kunststoffschmelze am Rande des Formhohlraums dient.

Besonders bevorzugt ist ferner, wenn das Spritzgießaggregat eine axial verschiebliche, in einer Bohrung laufende Schnecke mit einem ersten wirksamen Förderdurchmesser umfaßt, der wesentlich größer ist als ein zweiter wirksamer Förderdurchmesser des Kolbens.

Diese Maßnahme hat den Vorteil, daß die bereits beschriebene Lageregelung und damit auch Zeitregelung in wesentlich genauerer Weise möglich ist. Dies gilt unabhängig davon, ob aus dem Reserve-Hohlraum der gesamte Formhohlraum ausgefüllt oder nur eine Teilmenge zum Nachdrücken bereitgestellt wird. Wenn nämlich der wirksame Förderdurchmesser des Kolbens wesentlich kleiner ist als der entsprechende Förderdurchmesser der Schnecke, so wird für die Förderung bzw. Überführung desselben Volumens eine wesentlich größere Wegstrecke des Kolbens benötigt. Statt der bereits erwähnten beispielsweise 0,2 mm an Nachdrückhub bei einer Schnecke eines Spritzgießaggregates kann eine Strecke von z.B. 10 mm erreicht werden, wenn der wirksame Förderdurchmesser des Kolbens entsprechend klein eingestellt wird. Auf einer Wegstrecke von 10 mm für den Nachdrückhub kann aber eine wesentlich genauere Weg- und Zeitsteuerung realisiert werden, als wenn der Hub nur 0,2 mm beträgt. Dies gilt insbesondere auch für die Zeitsteuerung, bei der ein Zeitpunkt eingestellt werden soll, zu dem der Nachdrückvorgang beginnt. Während es bei herkömmlichen Vorrichtungen nur sehr schwer möglich ist, die mit hoher Geschwindigkeit vorlaufende und mit hoher Masse behaftete Schnecke schnell abzubremsen, kann dies bei einem kleinen und über eine lange Strecke laufenden Kolben in wesentlich einfacherer und genauerer Weise erreicht werden.

Bei weiteren Ausführungsbeispielen der erfindungsgemäßen Vorrichtung umfassen die Übertragungsmittel eine Rückstellfeder, die beim Befüllen des Reserve-Hohlraums gespannt wird und sich beim Überführen entspannt.

Diese Maßnahme hat den Vorteil, daß der Reserve-Hohlraum selbsttätig "geladen" und dann wieder entladen werden kann, indem die Rückstellfeder entsprechend gespannt bzw. entspannt wird. Als Rückstellfeder kann dabei eine übliche Schraübenfeder, aber auch eine Gasdruckfeder oder dergleichen eingesetzt werden.

Besonders bevorzugt ist weiterhin, wenn bei der erfindungsgemäßen Vorrichtung die Übertragungsmittel ferner eine zweite Kolben-Zylinder-Einheit umfassen.

Diese Maßnahme hat den Vorteil, daß ebenfalls robuste und zuverlässige Elemente eingesetzt werden können, die es darüber hinaus gestatten, eine präzise Lageregelung oder Zeitregelung zu realisieren.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine stark schematisierte Seitenansicht, im Schnitt, eines Ausschnitts aus einem Kunststoff-Spritzgießwerkzeug, wie es im Rahmen der vorliegenden Erfindung Verwendung finden kann, und zwar in einer Ausgangsstellung;
- Fig. 2: die Anordnung gemäß Fig. 1, jedoch in einer ersten Betriebsstellung;
- Fig. 3: die Anordnung gemäß Fig. 1, jedoch in einer zweiten Betriebsstellung;
- Fig. 4: die Anordnung gemäß Fig. 1, jedoch in einer dritten Betriebsstellung;
- Fig. 5: eine Darstellung, ähnlich Fig. 1, jedoch ein zweites Ausführungsbeispiel der Erfindung darstellend;
- Fig. 6: eine weitere Darstellung, ähnlich Fig. 1, jedoch ein drittes Ausführungsbeispiel der Erfindung betreffend, und zwar in einer ersten Betriebsstellung;
- Fig. 7: die Darstellung gemäß Fig. 6, jedoch für eine zweite Betriebsstellung.

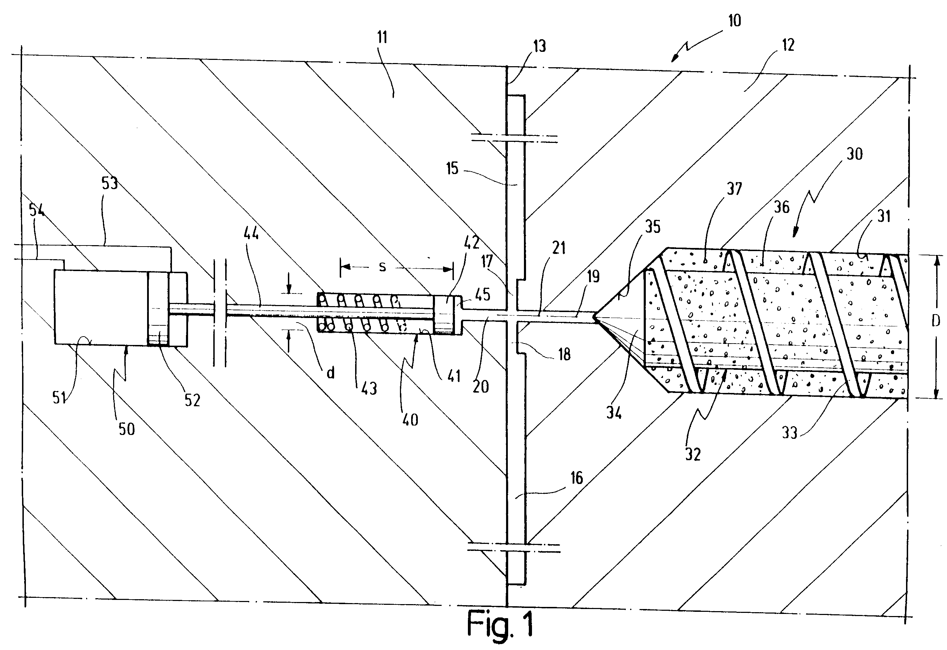

In Fig. 1 bezeichnet 10 insgesamt ein Werkzeug einer Kunststoff-Spritzgießmaschine von im übrigen herkömmlicher Bauart. Das Werkzeug 10 umfaßt eine erste Werkzeughälfte 11 sowie eine zweite Werkzeughälfte 12, die entlang einer Trennebene 13 aneinanderliegen.

Die Werkzeughälften 11, 12 schließen im dargestellten Ausführungsbeispiel zwei Formhohlräume zwischen sich ein, nämlich einen ersten Formhohlraum 15 sowie einen zweiten Formhohlraum 16. Es versteht sich, daß es ebenso gut möglich ist, nur einen einzigen Formhohlraum oder mehr als zwei Formhohlräume einzusetzen. Es versteht sich ferner, daß die dargestellten Formhohlräume 15, 16 in ihrer Formgebung lediglich beispielhaft zu verstehen sind. In Fig. 1 ist mit jeweils zwei strichpunktierten Linien angedeutet, daß die Formhohlräume 15, 16 sich wesentlich weiter nach oben bzw. unten erstrecken, als dies der Darstellung entspricht. Die Formhohlräume 15, 16 haben vorzugsweise eine flache, quaderförmige Gestalt mit abgerundeten Ecken, die den Abmessungen und der Formgebung von Scheckkarten bzw. Smart-Cards entspricht. Die Erfindung ist jedoch nicht auf dieses Anwendungsbeispiel beschränkt.

Die Formhohlräume 15, 16 sind über Angußkanäle 17, 18 mit einem ersten Zuführkanal 19 sowie einem zweiten Zuführkanal 20 verbunden. Die Zuführkanäle 19, 20 liegen koaxial zu einer Achse 21 der Gesamtanordnung.

In der zweiten Werkzeughälfte 12 ist ein Spritzgießaggregat 30 herkömmlicher Bauart angeordnet bzw. an diese angeschlossen. Das Spritzgießaggregat 30 umfaßt eine Bohrung 31 oder entsprechende Hülse, in der eine Schnecke 32 läuft. Die Schnecke 32 umfaßt Gänge 33 sowie eine Spitze 34. Die Spitze 34 ist an einen in seiner Formgebung komplementären Anschlag 35 anlegbar, der zugleich den Übergang zum ersten Zuführkanal 19 bildet. In den Zwischenräumen 36 zwischen den Gängen 33 befindet sich bei der in Fig. 1 dargestellten Ausgangsstellung ein mit 37 angedeutetes Granulat, wie es üblicherweise als Ausgangsmaterial für das Spritzgießen von Kunststoffteilen eingesetzt wird.

Der zweite Zuführkanal 20 führt zu einer ersten Kolben-Zylinder-Einheit 40, und zwar zu einer Zylinderbohrung 41 in der ersten Werkzeughälfte 11. In der Zylinderbohrung 41 läuft ein Kolben 42, der bei Ausführungsbeispielen der Erfindung mit einer Feder 43 vorgespannt sein kann. Der Kolben 42 ist mittels einer Kolbenstange 44 betätigbar.

In Fig. 1 ist der Raum der Zylinderbohrung 41 zwischen der rechten Stirnfläche des Kolbens 42 und dem Anschluß zum zweiten Zuführkanal 20 als Reserve-Hohlraum 45 bezeichnet. Die Funktion des Reserve-Hohlraums 45 wird weiter unten noch erläutert werden.

Zum Betätigen des Kolbens 42 über die Kolbenstange 44 dient eine zweite Kolben-Zylinder-Einheit 50. Diese umfaßt wiederum eine Zylinderbohrung 51, in der ein Kolben 52 läuft. Mittels Steuerleitungen 53, 54 kann ein Fluid, inbesondere eine Hydraulikflüssigkeit, auf der einen oder der anderen Seite des Kolbens 52 in die Zylinderbohrung 51 eingeleitet werden, um eine Verschiebung des Kolbens 52 und damit auch der Kolbenstange 44 zu bewirken.

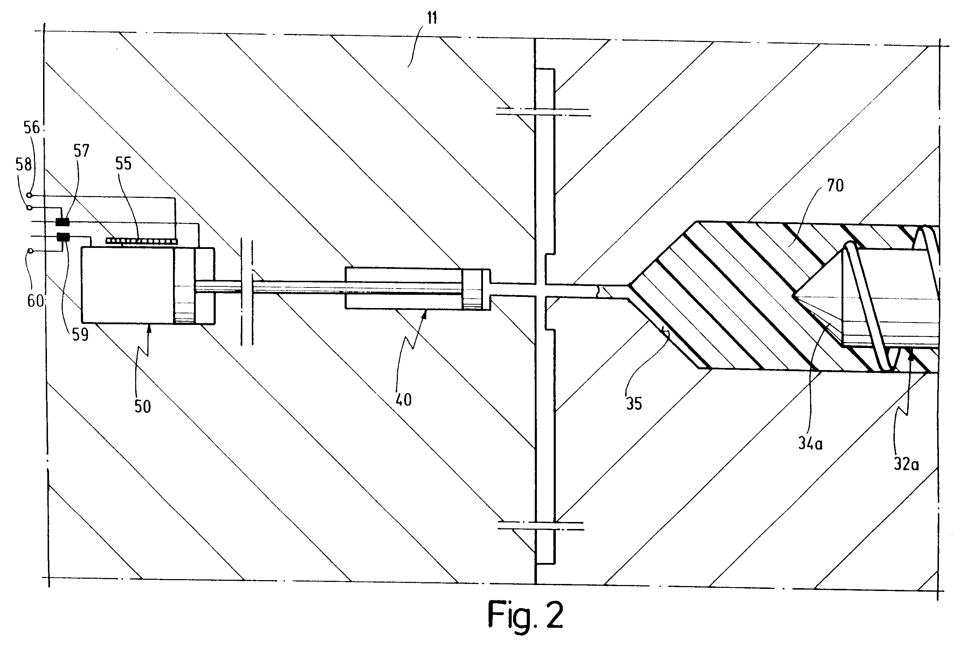

In Fig. 2 ist dazu angedeutet, daß ein Längensensor 55 mit dem Kolben 52 zusammenwirken kann, um dessen jeweilige Lage in der Zylinderbohrung 51 zu detektieren. Ein entsprechendes Wegesignal wird vom Längensensor 55 auf einen ersten Anschluß 56 übertragen.

In der Steuerleitung 53 kann ein erster Drucksensor 57 angeordnet sein, der zu einem zweiten Anschluß 58 führt. In entsprechender Weise kann ein zweiter Drucksensor 59 in der zweiten Steuerleitung 54 angeordnet und mit einem dritten Anschluß 60 verbunden sein.

Die Elemente 55 bis 60 erlauben in an sich bekannter Weise eine beliebige Lage-, Druck- oder Zeitregelung für eine Verschiebung des Kolbens 52 in der zweiten Kolben-Zylinder-Einheit 50 und damit auch für eine Verschiebung des Kolbens 42 in der ersten Kolben-Zylinder-Einheit 40.

Es versteht sich jedoch, daß die beiden Kolben-Zylinder-Einheiten 40 und 50 auch baulich vereinigt werden können, indem beispielsweise der auf der linken Seite des Kolbens 42 liegende Teil der Zylinderbohrung 41 einmal mit Überdruck und einmal mit Unterdruck angesteuert wird, um den Kolben 42 in beiden axialen Richtungen bewegen zu können und ohne dabei auf den Reserve-Hohlraum 45 einwirken zu müssen. Darüber hinaus ist es auch möglich, die Feder 43 im Reserve-Hohlraum 45 anzuordnen usw.

Fig. 1 zeigt, wie erwähnt, eine Ausgangsstellung des Werkzeugs 10, bei dem sich das noch ungeschmolzene Granulat 37 in den Zwischenräumen 36 zwischen den Gängen 33 der Schnecke 32 befindet.

Zum Einleiten eines Einspritzvorganges wird nun das Granulat 37 über eine in der Schnecke 32 oder um die Bohrung 31 herum angeordnete Heizung erwärmt und dadurch plastifiziert. Die Schnecke 32 dreht sich dabei und wandert in der Darstellung der Figuren von links nach rechts.

Schließlich ist die erste Betriebsstellung gemäß Fig. 2 erreicht. In Fig. 2 sind gleiche Elemente mit gleichen Bezugszeichen versehen. Wo Elemente eine andere Position aufweisen, ist im Bezugszeichen jeweils ein "a" hinzugefügt.

Die Schnecke 32a hat in Fig. 2 eine rechte Endstellung erreicht, in der zwischen ihrer Spitze 34 und dem Anschlag 35 ein Raum für flüssige Kunststoffschmelze 70 vorhanden ist. Das Volumen dieses Raumes ist durch axiales Positionieren der Schnecke 32a einstellbar. Das plastifizierte Volumen der Kunststoffschmelze 70 entspricht dann der für den Einspritzvorgang jeweils benötigten Menge.

In der ersten Betriebsstellung gemäß Fig. 2 sind die Elemente in der ersten Werkzeughälfte 11 noch unverändert.

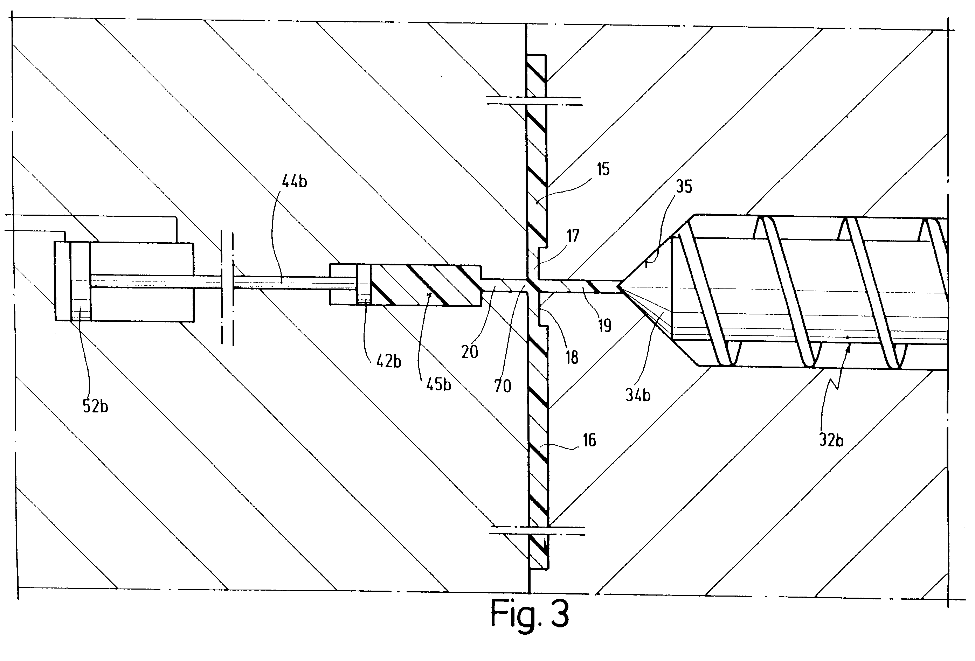

Für den Einspritzvorgang selbst wird nun die Schnecke 32a aus ihrer Stellung gemäß Fig. 2 in eine zweite Betriebsstellung gemäß Fig. 3 verfahren. Die Schnecke 32b ist wieder in ihrer linken Endstellung angelangt, in der ihre Spitze 34b auf dem Anschlag 35 aufliegt. Die Schnecke 32 wird also im Gegensatz zum Stand der Technik nicht kurz vor Erreichen des Anschlages 35 angehalten.

Durch das Vorfahren der Schnecke aus der Stellung 32a gemäß Fig. 2 in die Stellung 32b gemäß Fig. 3 wird die gesamte Kunststoffschmelze 70 vor der Spitze 34b hergeschoben und in den ersten Zuführkanal 19 eingedrückt.

Durch geeignete Querschnitte der Kanäle 17, 18, 20 und/oder durch Vorsehen von Ventilen in diesen Kanälen 17, 18, 20 kann man nun erreichen, daß die eingespritzte Kunststoffschmelze 70 in vorbestimmter Weise auf die Formhohlräume 15, 16 sowie - über den zweiten Zuführkanal 20 - in den Reserve-Hohlraum 45b verteilt wird. Im Extremfall kann man die Anordnung so wählen, daß die gesamte Kunststoffschmelze 70 in den Reserve-Hohlraum 45b eingespritzt wird und die Formhohlräume 15, 16 noch nicht befüllt werden.

Durch die Befüllung des Reserve-Hohlraums 45b wird der Kolben 42b in Fig. 3 nach links verschoben. Dies kann alleine unter der Einwirkung des Drucks in der Kunststoffschmelze 70 geschehen oder aber dadurch, daß der Kolben 42b mittels der Kolbenstange 44b und des Kolbens 52b nach links verfahren wurde.

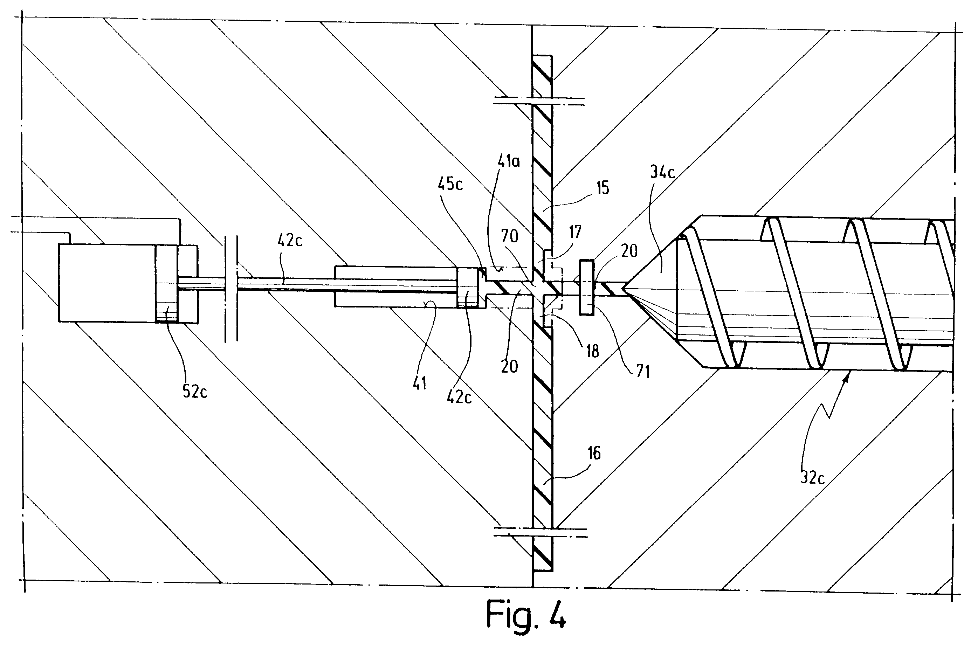

In der dritten Betriebsstellung gemäß Fig. 4 ist der zur Schnecke 32c führende zweite Zuführkanal 20 weiterhin durch die Spitze 34c versperrt. Demzufolge kann ab dem Erreichen der Betriebsstellung gemäß Fig. 3 im Bereich der Schnecke 32 bereits der nächste Plastifiziervorgang für das Granulat 37 eingeleitet werden.

Während dies geschieht, wird der Kolben 42c der ersten Kolben-Zylinder-Einheit 40 unter Einwirkung des Kolbens 52c der zweiten Kolben-Zylinder-Einheit 50 nach rechts verschoben. Die im Reserve-Hohlraum 45c befindliche Kunststoffschmelze 70 wird auf diese Weise über den zweiten Zuführkanal 20 und die Angußkanäle 17, 18 in die Formhohlräume 15, 16 überführt.

Im dargestellten Ausführungsbeispiel geschieht dies zum Zwecke des Nachdrückens, weil die Formhohlräume 15, 16 ja bereits mit Kunststoffschmelze 70 befüllt waren. In diesem Falle dient das im Reserve-Hohlraum 45c noch vorhandene Volumen an Kunststoffschmelze 70 nur dazu, die Volumenverminderung in den Formhohlräumen 15, 16 infolge der Schrumpfung der erstarrenden Kunststoffschmelze 70 zu kompensieren.

Bei anderen Anwendungsfällen der Erfindung kann jedoch das Volumen des Reserve-Hohlraumes 45 in der ersten Kolben-Zylinder-Einheit 40 so gewählt werden, daß es alleine ausreicht, um die Formhohlräume 15, 16 zu befüllen.

Mit 71 ist in Fig. 4 ferner angedeutet, daß im zweiten Zuführkanal 20 ein Absperrelement vorhanden sein kann, um die Schnecke 32 vom Formhohlraum 15, 16 zu trennen. Dies ermöglicht, das Werkzeug 10 entlang der Trennebene 13 öffnen zu können, um das fertig gespritzte Werkstück zu entnehmen, während zu diesem Zeitpunkt bereits in der Schnecke 32 das Kunststoffmaterial für den nächsten Einspritzvorgang plastifiziert werden kann und ohne daß Kunststoffschmelze über den zweiten Zuführkanal 20 abfließen kann.

In Fig. 1 ist noch veranschaulicht, daß die Schnecke 32 des Spritzgießaggregates 30 einen verhältnismäßig großen wirksamen Förderdurchmesser D aufweist. Demgegenüber ist der wirksame Förderdurchmesser d des Kolbens 42 in der ersten Kolben-Zylinder-Einheit 40 wesentlich kleiner. Der Kolben 42 muß daher zum Verdrängen der selben Menge einen wesentlich größeren Weg s durchmessen, als dies die Schnecke 32 mußte. Da der Weg s infolge der starren Verbindung über die Kolbenstange 44 direkt auf den Kolben 52 der zweiten Kolben-Zylinder-Einheit 50 übertragen wird, kann dort mittels des Längensensors 55 der Verfahrweg s genau erfaßt und geregelt werden. Die Drucksensoren 57, 59 gestatten es dabei, nicht nur den Verfahrvorgang zu optimieren. Sie gestatten es ferner, den Druckverlauf im Kanalsystem 17, 18, 19, 20 zu überwachen und durch geeignete Auswertung der gemessenen Drucksignale die Zeitsteuerung zu optimieren. Insbesondere kann damit der Zeitpunkt genau erkannt werden, ab dem es zweckmäßig ist, den Nachdrückvorgang zu beginnen bzw. wieder zu beenden.

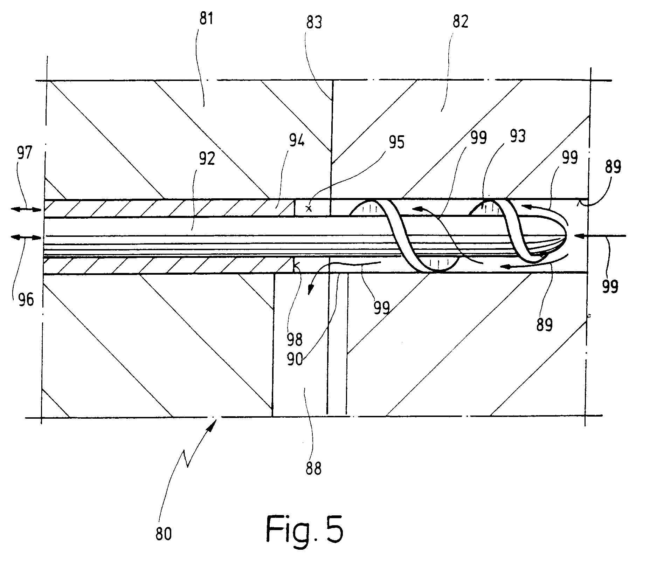

Bei dem in Fig. 5 dargestellten Ausführungsbeispiel weist ein Werkzeug 80 wiederum eine erste Werkzeughälfte 81 und eine zweite Werkzeughälfte 82 auf, die entlang einer Trennebene 83 aneinanderliegen und zwischen sich einen Formhohlraum 88 einschließen.

Ein Angußkanal 89 erstreckt sich senkrecht zur Trennebene 83. Er steht über eine Öffnung 90 mit dem Formhohlraum 88 in Verbindung. Die Öffnung 90 kann flächig oder als Spalt ausgebildet sein. Wenn die Öffnung 90 sich bezüglich des Formhohlraums 88 im Bereich einer abgerundeten Ecke befindet (Anwendungsfall einer Scheckkarte), so kann der Angußkanal 89 als Durchdringung dieser abgerundeten Ecke ausgebildet sein.

Im Angußkanal 89 läuft axial eine Stange 92. Die Stange 92 ist an ihrem rechten freien Ende mit einer Schnecke 93 versehen. Die Stange 92 ist ferner in der Darstellung gemäß Fig. 5 im Bereich der ersten Werkzeughälfte 81 mit einem Ringkolben 94 umgeben, der den Zwischenraum zwischen Stange 92 und Angußkanal 89 ausfüllt. Der Raum zwischen dem freien Ende des Ringkolbens 94 und der Schnecke 93 ist hier der Reserve-Hohlraum 95. Wie mit Pfeilen 96, 97 angedeutet, sind die Stange 92 einerseits und der Ringkolben 94 andererseits separat in axialer Richtung bewegbar.

Wenn, wie mit Pfeilen 99 angedeutet, eine Kunststoffschmelze von rechts in den Angußkanal 89 einströmt, so wird diese zunächst vermischt und homogenisiert, weil die Kunststoffschmelze zunächst um die Gänge der Schnecke 93 herum fließen muß. Die Kunststoffschmelze strömt dann durch die Öffnung 90 in den Formhohlraum 88 ein.

Wenn der Formhohlraum 88 ausgefüllt ist, so wird die Verbindung zu dem (nicht dargestellten) Spritzgießaggregat versperrt, und der Ringkolben 94 fährt nach rechts. Diese Bewegung bewirkt zweierlei:

Zum einen wird dadurch ein Nachdrücken bewirkt, weil Kunststoffschmelze aus dem Reserve-Hohlraum 95 nach unten durch die Öffnung 90 in den Formhohlraum 88 überführt wird, so daß auch in diesem Falle eine Kompensation der Volumenverringerung erreicht wird.

Zum anderen überfährt aber eine Steuerkante 98 auf der Stirnseite am freien Ende des Ringkolbens 94 die Öffnung 90. Dadurch wird erreicht, daß der durch die Öffnung 90 hindurchreichende Strang an Kunststoffmaterial sauber abgeschert wird. Im Formhohlraum 88 erstarrt die Kunststoffschmelze, wobei sie sich im Bereich der Öffnung 90 an die dort bündig anliegende Oberfläche des Ringkolbens 94 anlegt. Auf diese Weise entsteht im Bereich der Öffnung 90 kein Anguß, der nach dem Entformen des Kunststoffteils mit bloßem Auge sichtbar wäre.

In entsprechender Weise ist in Fig. 4 mit 41a angedeutet, daß die Zylinderbohrung mit ihrem größeren Querschnitt auch über die Angußkanäle 17, 18 hinaus verlängert sein kann. Dann kann der Kolben 42c in axialer Richtung über die Position der Formhohlräume 15, 16 hinaus verschoben werden, so daß auch in diesem Fall die Kunststoffschmelze im Bereich des Übergangs zwischen der Zylinderbohrung 41a und den Formhohlräumen 15, 16 abgeschert wird. Auf diese Weise entstehen vollkommen angußfreie Werkstücke.

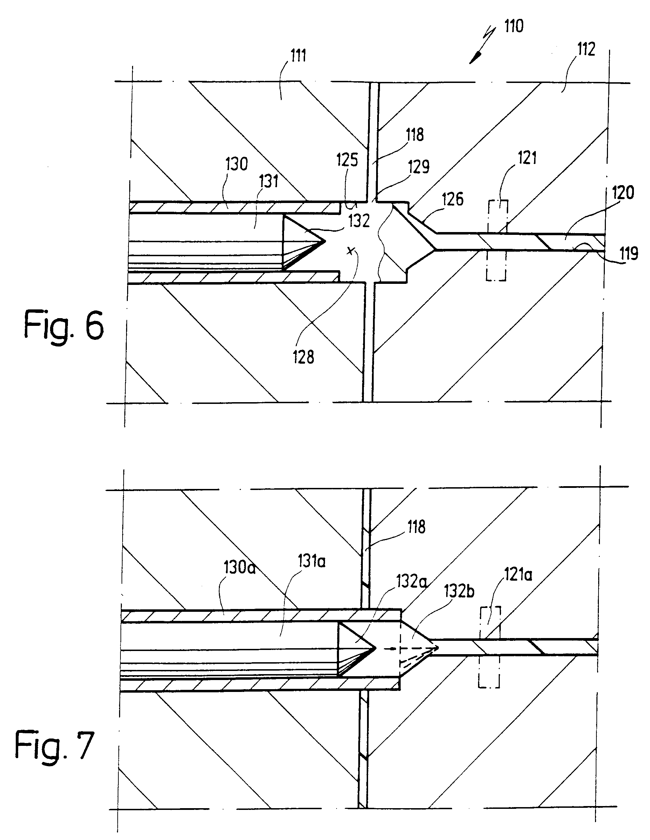

In den Fig. 6 und 7 ist noch ein drittes Ausführungsbeispiel der Erfindung dargestellt.

Ein Werkzeug 110 weist zwei Werkzeughälften 111, 112 auf, wie dies bereits prinzipiell weiter oben beschrieben wurde.

Ein Formhohlraum 118 zwischen den Werkzeughälften 111, 112 ist in diesem Fall ebenfalls von sehr flacher Gestalt. Das herzustellende Werkstück ist demzufolge ein flaches Werkstück, das darüber hinaus mit einer Durchgangsbohrung von verhältnismäßig großem Durchmesser versehen werden soll. Ein typisches Anwendungsbeispiel für ein solches Werkstück ist eine Compact-Disc.

Ein Angußkanal 119 führt in der Darstellung gemäß Fig. 6 die einströmende Kunststoffschmelze 120, wobei ein im Angußkanal 119 angeordnetes Absperrelement 121 geöffnet ist.

Die Kunststoffschmelze 120 strömt in eine Zylinderbohrung 125, die der Durchgangsbohrung durch das herzustellende Werkstück entspricht. Die Zylinderbohrung 125 größeren Durchmessers ist mit dem Angußkanal 119 kleineren Durchmessers über einen konischen Übergang 126 verbunden.

Die Zylinderbohrung 125 bildet im Bereich des Überganges zu dem Formhohlraum 118 einen Reserve-Hohlraum 128, der über eine Öffnung 129 mit dem Formhohlraum 118 in Verbindung steht.

In der Zylinderbohrung 125 läuft als äußerer Kolben ein Hohlzylinder 130, in dem ein Kolben 131 axial geführt ist. Der Kolben 131 ist an seinem in Fig. 6 und 7 rechten Ende mit einer Spitze 132 versehen. Die Spitze 132 ist komplementär zum konischen Übergang 126 ausgebildet.

In der ersten Betriebsstellung gemäß Fig. 6 befinden sich der Hohlzylinder 130 und der Kolben 131 in einer in der Zylinderbohrung 125 zurückgezogenen Stellung. Die Kunststoffschmelze 120 kann nun durch den Angußkanal 119 und das offene Absperrelement 121 in den Reserve-Hohlraum 128 und von dort über die Öffnung 129 in den Formhohlraum 118 einströmen.

Wenn der Formhohlraum 118 in vorbestimmter Weise gefüllt ist, wird der Kolben 131 nach rechts verschoben, so daß Kunststoffschmelze 120 aus dem Reserve-Hohlraum 128 in den Formhohlraum 118 nachgedrückt wird. Zeitgleich mit der Beendigung dieses Nachdrückvorganges wird der Hohlzylinder 130 vorgeschoben, so daß die Kunststoffschmelze 120 im Bereich der Öffnung 129 abgeschert wird. Die Endstellung des Hohlzylinders ist in Fig. 7 mit 130a bezeichnet. Der Kolben 131 wird, wie mit 131a bezeichnet, ebenfalls nach rechts verschoben, bis die Spitze 132a in ihrer Endstellung 132b in Anlage an den konischen Übergang 126 gerät. Das Absperrelement 121a kann nun verschlossen werden.

Das Werkzeug 110 kann nun geöffnet werden, um die im Formhohlraum 118 hergestellte Compact-Disc zu entnehmen. Da das Absperrelement 121a nun geschlossen ist, kann stromaufwärts im Angußkanal 119, nämlich im Bereich der (nicht dargestellten) Schnecke der Plastifizierungsvorgang für den nächsten Einspritzvorgang eingeleitet werden, während das Werkzeug 110 noch geöffnet ist.

## Patentansprüche

1. Verfahren zum Spritzgießen von Kunststoffteilen, bei dem eine vorbestimmte Menge einer Kunststoffschmelze (70; 120) über einen Angußkanal (19; 119) in mindestens einen Formhohlraum (15, 16; 88; 118) eines Werkzeugs (10; 80; 110) eingebracht wird, wobei mindestens ein Teil der Menge zunächst in einen Reserve-Hohlraum (45; 95; 128) eingebracht und dann in den mindestens einen Formhohlraum (15, 16; 88; 118) überführt wird, dadurch gekennzeichnet, daß die Kunststoffschmelze (70; 120) am Ende des Angußkanals (19; 119) verzweigt wird, wobei der erste Teil der Menge in den Formhohlraum (15, 16; 88; 118) und gleichzeitig ein zweiter Teil in den Reserve-Hohlraum (45; 95; 128) eingebracht wird.

2. Verfahren nach Anspruch 1, dadurch gekennzeichnet, daß der erste Teil der Menge wesentlich größer als der zweite Teil ist.

3. Verfahren nach Anspruch 1, dadurch gekennzeichnet, daß der erste Teil der Menge wesentlich kleiner als der zweite Teil ist, und daß der erste Teil der Menge zum Nachdrücken von Kunststoffschmelze (70; 120) in den mindestens einen Formhohlraum (15, 16; 88; 118) eingesetzt wird.

4. Vorrichtung zum Spritzgießen von Kunststoffteilen, mit einem Werkzeug (10; 80; 110), mit mindestens einem Formhohlraum (15, 16; 88; 118) im Werkzeug (10; 80; 110), mit einem an das Werkzeug (10; 80; 110) anschließbaren Spritzgießaggregat (30) zum Einbringen von Kunststoffschmelze (70; 120), und mit mindestens einem Kanal (17, 18, 19; 89; 119), der den mindestens einen Formhohlraum (15, 16; 88; 118) mit dem Spritzgießaggregat (30) verbindet, wobei das Spritzgießaggregat (30) mit einem Reserve-Hohlraum (45; 95; 128) in Verbindung steht, und Mittel zum Überführen von Kunststoffschmelze (70; 120) aus dem Reserve-Hohlraum (45; 95; 128) in den Formhohlraum (15, 16; 88; 118) vorgesehen sind, dadurch gekennzeichnet, daß der Reserve-Hohlraum (45; 95; 128) im Werkzeug (10; 80; 110) angeordnet ist, und daß der Kanal (17, 18, 19; 89; 119) ausgangsseitig in den Formhohlraum (15, 16; 88; 118) einerseits und in den Reserve-Hohlraum (45; 95; 128) andererseits verzweigt ist.

5. Vorrichtung nach Anspruch 4, dadurch gekennzeichnet, daß der Reserve-Hohlraum (45; 95; 128) als Zylinderbohrung (41; 89; 125) einer ersten Kolben-Zylinder-Einheit (40) ausgebildet ist, dessen Kolben (42; 94; 130, 131) Teil der Überführungsmittel ist.

6. Vorrichtung nach Anspruch 5, dadurch gekennzeichnet, daß der Kolben (42c; 94; 130) an einer den Formhohlraum (15, 16; 88; 118) mit dem Kanal (20; 89; 119) verbindenden Öffnung (90; 129) angeordnet und so verschiebbar ist, daß eine Steuerkante (98) des Kolbens (42c; 94; 130) über die Öffnung (90; 129) führbar ist.

7. Vorrichtung nach Anspruch 6, dadurch gekennzeichnet, daß der Kolben (130) als Hohlzylinder ausgebildet ist, der auf einem Innenkolben (131) läuft.

8. Vorrichtung nach einem oder mehreren der Ansprüche 5 bis 7, dadurch gekennzeichnet, daß das Spritzgießaggregat (30) eine axial (21) verschiebliche, in einer Bohrung (31) laufende Schnecke (32) mit einem ersten wirksamen Förderdurchmesser (D) umfaßt, der wesentlich größer ist als ein zweiter wirksamer Förderdurchmesser (d) des Kolbens (42; 94).

9. Vorrichtung nach einem oder mehreren der Ansprüche 4 bis 7, dadurch gekennzeichnet, daß die Überführungsmittel eine Rückstellfeder (43) umfassen, die beim Befüllen des Reserve-Hohlraums (45; 95) gespannt wird und sich beim Überführen entspannt.

10. Vorrichtung nach einem oder mehreren der Ansprüche 5 bis 9, dadurch gekennzeichnet, daß die Überführungsmittel ferner eine zweite Kolben-Zylinder-Einheit (50) umfassen.

11. Vorrichtung nach einem oder mehreren der Ansprüche 4 bis 10, dadurch gekennzeichnet, daß die Überführungsmittel eine Lageregelung (55, 56) umfassen.

12. Vorrichtung nach einem oder mehreren der Ansprüche 4 bis 11, dadurch gekennzeichnet, daß die Überführungsmittel eine Druckregelung (57-60) umfassen.

13. Vorrichtung nach einem oder mehreren der Ansprüche 4 bis 12, dadurch gekennzeichnet, daß die Überführungsmittel eine Zeitregelung umfassen.
